(19) Europäisches Patentamt

European Patent Office

Office européen des brevets

(11) Veröffentlichungsnummer: **0 330 887 B1**

(12) **EUROPÄISCHE PATENTSCHRIFT**

(45) Veröffentlichungstag der Patentschrift: **11.11.92**

(21) Anmeldenummer: **89102327.7**

(22) Anmeldetag: **10.02.89**

Verbunden mit 89902640.5/0406254
(europäische
Anmeldenummer/Veröffentlichungsnummer)
durch Entscheidung vom 30.12.91.

(51) Int. Cl.5: **C09D 133/00**, C09D 135/00,
C09D 163/00, C09D 167/00,
C08G 59/46

(54) **Überzugsmittel auf der Basis Carboxylgruppen und Aminogruppen enthaltender Polykondensations- und/oder Additions-produkte sowie deren Verwendung.**

(30) Priorität: **02.03.88 DE 3806641**

(43) Veröffentlichungstag der Anmeldung:
**06.09.89 Patentblatt 89/36**

(45) Bekanntmachung des Hinweises auf die
Patenterteilung:
**11.11.92 Patentblatt 92/46**

(84) Benannte Vertragsstaaten:
**AT BE CH DE ES FR GB IT LI NL SE**

(56) Entgegenhaltungen:
EP-A- 0 123 793
DE-A- 2 016 060
DE-A- 3 534 858

**PATENT ABSTRACTS OF JAPAN, Band 12,
Nr. 237 (C-509)[3084], 6. Juli 1988**

**WPI, FILE SUPPLIER, Nr. 77-56429Y, Derwent
Publications Ltd, London, GB**

(73) Patentinhaber: **BASF Lacke + Farben AG
Glasuritstrasse 1
W-4400 Münster(DE)**

(72) Erfinder: **Jung, Werner Alfons, Dr.
Uhrwerkerstrasse 65
W-4715 Ascheberg(DE)**
Erfinder: **Vorbeck, Udo
2350 Old Stone Court No. 7
Toledo Ohio 43614(US)**

(74) Vertreter: **Münch, Volker, Dr. et al
c/o BASF Lacke + Farben AG Patentabteilung Glasuritstrasse 1 Postfach 61 23
W-4400 Münster(DE)**

## Beschreibung

Die vorliegende Erfindung betrifft Überzugsmittel auf Basis Carboxylgruppen und Aminogruppen enthaltender Polykondensations- und/oder Additionsprodukte sowie deren Verwendung.

Es ist bekannt, daß Verbindungen, die einen Epoxidring enthalten, mit carboxylgruppenhaltigen Verbindungen unter Ringöffnung reagieren. Beim Einsatz von Verbindungen mit mehr als einer Epoxidgruppe und mehr als einer Carboxylgruppe verläuft die Reaktion unter Ausbildung polymerer Ester, welche sekundäre Hydroxylgruppen enthalten. Diese Polymerenbildung ist bekannt unter dem Begriff "säurehärtende Epoxidharze".

Es ist bekannt, daß diese Epoxy-Carboxy-Reaktion durch geeignete basische Verbindungen katalysiert werden kann. Geeignete basische Katalysatoren sind z.B. Diazabicyclooctan, Diazabicyclononen, Diazabicycloundecen, Imidazolderivate, wie 3-Methyl-, Phenyl- oder Cyclohexylimidazol, Trialkylamine, wie Triethyl-, Tributyl-, Tricyclohexylamin, N,N'-Dialkylpiperazine, Trialkyl- bzw. Triarylphosphine, Hydroxyde, Carbonate und Salze organischer Säuren der Alkalimetalle, wie Lithiumhydroxyd, Kaliumcarbonat, Natrium-und Lithiumbenzoat. Weitere geeignete Katalysatoren sind Chelate des Magnesiums, Aluminiums und des Titans.

Aus der EP-B-51 275 ist eine reaktive härtbare Bindemittelmischung auf der Basis von speziellen Polycarbonsäureeinheiten, basierend 1.) auf Polymerisations- und/oder Kondensationsprodukten, wobei Carboxylgruppen beispielsweise durch Addition von cyclischen Carbonsäureanhydriden an OH-Acrylate gebildet werden, und 2.) auf aliphatischen oder cycloaliphatischen Epoxidverbindungen bekannt. Der Vorteil der härtbaren Bindemittelmischung besteht darin, daß ein Katalysator für die Carboxy- Epoxy-Vernetzung in Form von Metallsalzen neben dem Bindemittel vorliegt, so daß auf einen externen Katalysator verzichtet werden kann.

Aus der EP-A-123 793 ist eine bereits bei Raumtemperatur aushärtende Zusammensetzung bekannt, bestehend aus Polyepoxiden und Polymeren, welche Carboxylgruppen und tertiäre Aminogruppen enthalten und entstehen durch Reaktion von Säureanhydrid- und Carboxylgruppen enthaltenden Vinylpolymeren mit Verbindungen, die mindestens einen aktiven Wasserstoff, der zur Reaktion mit Säureanhydriden befähigt ist, und mindestens eine tertiäre Aminogruppe enthalten, wie beispielsweise tertiäre Aminoalkohole. Die beschriebenen Zusammensetzungen haben den Vorteil, daß sie bereits bei Raumtemperatur aushärten, gute Benzin-, Wasser- und Alkalibeständigkeit aufweisen und daß keine unerwünschten Verfärbungen, die auf tertiäre Aminoverbindungen zurückzuführen sind, auftreten.

Die carboxylgruppenhaltigen Acrylate der EP-A 123 793 haben jedoch den Nachteil, daß sie mit polaren Epoxiden (z.B. auf Basis eines Umsetzungsproduktes von Melaminharzen mit Acrylamid unter anschließender Epoxidierung der Acryl-Doppelbindung) unverträglich sind.

Aus der DE-OS 26 35 177 sind Zusammensetzungen aus Acrylatharzen und Di- und Polyepoxiden bekannt. In die Acrylatharze sind $\alpha,\beta$-ethylenisch ungesättigte Carbonsäuren einpolymerisiert, und die Harze haben eine Säurezahl von 70 bis 250. Die Zusammensetzungen weisen einen hohen Festkörpergehalt auf und zeigen gute Ergebnisse hinsichtlich mechanischer Eigenschaften, Chemikalien- und Lösungsmittelbeständigkeit sowie Korrosionsbeständigkeit.

Aus der JP-OS 76 338/77 ist eine Überzugszusammensetzung bekannt, die erhältlich ist durch Mischen von Acrylatcopolymerisaten aus Acrylsäureestern, carboxylgruppenhaltigen Monomeren und Acrylmonomeren, die tertiären Stickstoff enthalten, wie beispielsweise Diethylaminoethylacrylat, mit Polyepoxiden. Die Überzugszusammensetzungen können bei niedrigen Temperaturen aushärten und haben einen hohen Festkörpergehalt.

Aus der WO 87/02041 sind Überzugsmittel auf der Basis von Polyepoxiden und von verzweigten carboxyl- und aminogruppenhaltigen Acrylatharzen bekannt, wobei die Acrylatharze Säurezahlen zwischen 15 und 200 aufweisen und hergestellt werden unter Verwendung von mehr als 3 bis 30 Gew.% eines Monomeren mit mindestens zwei polymerisierbaren, olefinisch ungesättigten Doppelbindungen. Diese Überzugsmittel führen zu Überzügen mit guten technischen Eigenschaften, sind aber in bezug auf die Lösemittelbeständigkeit verbesserungsbedürftig.

Aus der DE-OS 21 61 253 sind tertiäre Aminogruppen und Carboxylgruppen enthaltende Alkydharze bekannt, die mit Melaminharzen vernetzt werden. Die Einführung der tertiären Aminogruppen in das Alkydharz erfolgt durch Verwendung von 5 bis 100 Gew.%, vorzugsweise 20 bis 60 Gew.%, stickstoffhaltiger mehrwertiger Alkohole bei der Polykondensation.

Aus der DE-OS 20 16 060 ist bekannt, daß durch den Einbau von tertiären Aminogruppen in Alkydharze die Verträglichkeit mit anderen Harzen verbessert wird, so daß auch Mischungen von tertiäre Aminogruppen enthaltenden Polyestern mit thermoplastischen oder thermohärtbaren Acrylharzen, die allerdings keine tert. Aminogruppen aufweisen, hergestellt werden können. Im Gegensatz zur vorliegenden Erfindung erfolgt die Härtung der Harze bzw. Harzmischungen über eine Reaktion mit Melamin- und nicht mit Epoxidharzen.

Die Aufgabe der vorliegenden Erfindung bestand darin, die Eigenschaften der Überzugsmittel bzw. der Überzüge auf der Basis einer Epoxy-Carboxy-Vernetzung zu verbessern in Hinsicht auf die Beständigkeit gegenüber langfristiger Belastung durch Chemikalien, Lösungsmitteln, in Hinsicht auf die Benzinfestigkeit, die Elastizität der auf Basis der Überzugsmittel erhaltenen Überzüge, des Glanzes, der Korrosionsbeständigkeit und hinsichtlich der Beständigkeit gegenüber Wasser bzw. Wasserdampf. Außerdem wird an die Zusammensetzungen der Anspruch gestellt, daß sie gegebenenfalls bei Raumtemperatur oder bei leicht erhöhter Temperatur aushärten und damit beispielsweise in der Autoreparaturlackierung eingesetzt werden kann.

Zudem besteht die Aufgabe, solche Überzugszusammensetzungen zur Verfügung zu stellen, die eine so niedrige Farbzahl aufzeigen, daß sie als Klarlack allgemein bzw. in einem Mehrschichtsystem als Klarlack auf Basislack eingesetzt werden können.

Außerdem müssen die Carboxyl- und tertiären Aminogruppen enthaltenden Polymeren auch mit polaren Epoxiden, also beispielsweise Epoxiden auf Basis eines Umsetzungsproduktes von Melaminharzen mit Acrylamid unter anschließender Epoxidierung der Acryl-Doppelbindung, verträglich sein.

Diese Aufgabe wird nun überraschenderweise durch ein Überzugsmittel gelöst, enthaltend

A) eine carboxyl- und aminogruppenhaltige Komponente (A),

B) ein Epoxidharz als Vernetzer mit im Mittel mehr als einer Epoxidgruppe pro Molekül,

C) ein oder mehrere organische Lösungsmittel,

D) gegebenenfalls Pigmente, übliche Hilfsstoffe und Additive,

und bei dem das Verhältnis der freien Carboxylgruppen der Komponente (A) zur Anzahl der Epoxidgruppen im Bereich von 1 : 3 bis 3 : 1 liegt, wobei es erfindungswesentlich ist, daß die Komponente (A) besteht aus

1) 10 bis 90 Gew.-% eines carboxyl- und aminogruppenhaltigen Polyacrylates (A1) mit einer Säurezahl von 20 bis 140, bevorzugt 30 bis 90, einer Aminzahl von 5 bis 60, bevorzugt 10 bis 40,

2) 90 bis 10 Gew.-% eines carboxyl- und aminogruppenhaltigen Polyesters (A2) mit einer Säurezahl von 10 bis 160, bevorzugt 20 bis 120 und einer Aminzahl von 3 bis 90, vorzugsweise 10 bis 60, wobei der Polyester (A2) erhältlich ist durch Umsetzung von

a) Polycarbonsäuren oder deren Anhydriden, gegebenenfalls zusammen mit Monocarbonsäuren,

b) Polyolen, gegebenenfalls zusammen mit Monoolen, und gegebenenfalls

c) Polyisocyanaten und/oder Diepoxidverbindungen, gegebenenfalls auch Monoisocyanaten und/oder Monoepoxidverbindungen und gegebenenfalls

d) Monoisocyanaten mit mindestens einer tertiären Aminogruppe oder Polyaminen mit mindestens einer tertiären und mindestens einer primären oder sekundären Aminogruppe, mit der Maßgabe, daß das Endprodukt tertiäre Aminogruppen enthält, die aus der Komponente a) und/oder b) und/oder d) stammen,

wobei die Summe der Komponenten (A1) bis (A2) 100 Gew.-% ergibt.

Die Herstellung der Komponente (A1) kann auf verschiedenen Wegen geschehen. So können die Carboxylgruppen durch Verwendung von carboxylgruppenhaltigen Monomeren bei der Copolymerisation in das Polymer eingeführt werden.

Beispiele für geeignete carboxylgruppenhaltige Monomere sind Acrylsäure, Methacrylsäure, Itaconsäure, Crotonsäure, Aconitsäure, Malein- und Fumarsäure sowie deren Halbester, Carboxyethylacrylat, Phthalsäure-mono-2-methacryloyloxyethylester, Hexahydrophthalsäure-mono-2-methacryloyloxyethylester, Hexahydrophthalsäure-mono-4-acryloyloxybutylester sowie caprolactonmodifizierte Acrylatmonomere mit COOH-Gruppen wie z.B. das Handelsprodukt TONE XM 300 der Firma Union Carbide/USA, ein Polyesteracrylat auf Basis Caprolacton mit einem Molgewicht von ca. 500 mit einer polymerisierfähigen Doppelbindung und einer Carboxylgruppe.

Die Einführung der Carboxylgruppen in das Acrylatharz (A1) kann auch - wie in der W 087/02041 oder in der EP-B-51 275 beschrieben - dadurch erfolgen, daß zunächst die entsprechenden Monomeren in einem organischen Lösungsmittel bei 70 bis 130 °C, vorzugsweise bei 80 bis 120 °C, unter Verwendung von mindestens 0,5 Gew.%, vorzugsweise mindestens 2,5 Gew.%, bezogen auf das Gesamtgewicht der Monomeren eines Polymerisationsreglers und unter Verwendung von Polymerisationsinitiatoren zu einem vorvernetzten, nicht gelierten hydroxylgruppenhaltigen Produkt copolymerisiert werden und nach Beendigung der Copolymerisation die Umsetzung mit den cyclischen Säureanhydriden erfolgt.

Selbstverständlich können auch cyclische Säureanhydride an Polyacrylate addiert werden, die neben Hydroxylgruppen bereits Carboxylgruppen enthalten. Beispiele für geeignete Säureanhydride sind in der WO 87/02041 aufgeführt.

Die Einführung der tertiären Aminogruppen kann durch die Verwendung von Monomeren mit tertiären Aminogruppen bei der Copolymerisation erfolgen, wie dies beispielsweise in der WO 87/02041 beschrieben ist. Beispiele für geeignete ethylenisch ungesättigte Verbindungen mit einer tertiären Aminogruppe sind N,N'-Dimethylaminoethylmethacrylat, N,N'-Diethylaminoethylmethacrylat, 2-Vinylpyridin, 4-Vinylpyridin, Vinylpyrrolin, Vinylchinolin, Vinylisochinolin, N,N'-Dimethylaminoethylvinylether und 2-Methyl-5-vinylpyridin.

Die Einführung der tertiären Aminogruppen in das Polymer kann bevorzugt dadurch erfolgen, daß man a) einen Aminoalkohol mit einer tertiären Aminogruppe oder eine äquivalente Verbindung mit b) einem Polyisocyanat zu einer Verbindung umsetzt, die pro Molekül durchschnittlich 0,8 bis 1,5, vorzugsweise 1, freie Isocyanatgruppen und mindestens eine tertiäre Aminogruppe enthält. Diese Verbindung wird anschließend an ein Acrylat mit Carboxyl- und Hydroxylgruppen addiert. Als Diisocyanate eignen sich insbesondere solche, bei denen die Isocyanatgruppen unterschiedliche Reaktivitäten aufweisen, wie beispielsweise das Isophorondiisocyanat. Werden Polyisocyanate mit NCO-Gruppen gleicher Reaktivität verwendet, ist es bevorzugt, das Polyisocyanat im Überschuß einzusetzen und anschließend den Überschuß abzudestillieren, so daß ein 1:1-Addukt erhalten wird. Eine genauere Beschreibung dieses Herstellungsverfahrens findet sich in der deutschen Patentanmeldung 37 31 652 sowie außerdem in der DE-OS 28 36 830, in der dieses Verfahren für die Einführung von tertiären Aminogruppen in hydroxylgruppenhaltige Polymerisate für die Herstellung von Bindemitteln für die kathodische Elektrotauchlackierung beschrieben ist.

Die Einführung der tertiären Aminogruppen in das Polymermolekül kann auch durch Addition von Aminoalkoholen an Glycidylgruppen enthaltende Polyacrylate erfolgen. Dieser Weg ist beschrieben in DE-OS 29 00 592. Im Anschluß an die Addition erfolgt eine Additionsreaktion von cyclischen Carbonsäureanhydriden.

Vorzugsweise wird als Polyacrylat (A1) ein lösliches, vorvernetztes Acrylatcopolymerisat eingesetzt. Diese werden hergestellt unter Verwendung von mehr als 3 bis 30 Gew.% Monomeren mit mindestens zwei polymerisierbaren, olefinisch ungesättigten Doppelbindungen, bezogen auf das Gesamtgewicht der Monomeren. Die tertiäre Aminogruppe kann auf verschiedenen Wegen in das vorvernetzte Polyacrylat eingeführt werden, beispielsweise unter Verwendung von tert. Aminen mit einer copolymerisierbaren Doppelbindung. Die löslichen vorvernetzten Polyacrylate sowie deren Herstellung sind beschrieben in WO 87/02041. Der Vorteil dieser Polyacrylate besteht u.a. darin, daß die resultierenden Filme eine gute Löse-und Wasserbeständigkeit aufweisen und relativ schnell trocknen.

Bevorzugt weist das Acrylatcopolymerisat (A1) eine OH-Zahl von größer als 20 mg KOH/g auf, da in diesem Fall eine besonders gute Verträglichkeit mit als Vernetzungsmitteln eingesetzten polaren Polyepoxiden gegeben ist.

Geeignete Polycarbonsäuren (Komponente a)) zur Herstellung der Polyester (A2) sind beispielsweise Phthalsäure, Isophthalsäure, Terephthalsäure, Halogenphthalsäuren, wie Tetrachlor- bzw. Tetrabromphthalsäure, Hexahydrophthalsäure, Adipinsäure, Sebacinsäure, Fumarsäure, Maleinsäure, Endomethylentetrahydrophthalsäure, 1,1,3-Trimethyl-3-phenylindan-4',5-dicarbonsäure, Trimellitsäure sowie Anhydride der genannten Säuren, sofern diese existieren.

Für die Herstellung von Polyestern mit möglichst niedriger Farbzahl ist die Verwendung von aliphatischen und cycloaliphatischen Polycarbonsäuren bzw. von deren Anhydriden, die nicht nach dem Oxo-Prozeß hergestellt werden, bevorzugt. Besonders bevorzugt ist die Verwendung von Cyclohexandicarbonsäure, da sie zu farblosen Polymeren führt, die außerdem zugleich zu einer guten Trocknung und Härteentwicklung im Lackfilm führen. Gegebenenfalls können zusammen mit den Polycarbonsäuren auch Monocarbonsäuren eingesetzt werden, wie beispielsweise Benzoesäure, tert. Butylbenzoesäure, Laurinsäure, Isononansäure und Fettsäuren natürlich vorkommender Öle.

Als Komponente a) (Carbonsäurekomponente) können in einer bevorzugten Ausführungsform u.a. oder ausschließlich Aminocarbonsäuren mit mindestens einer tert. Aminogruppe verwendet werden. Beispiele hierfür sind: Pyridin-2-carbonsäure, Pyridin-3-carbonsäure, Pyridin-4-carbonsäure und Pyridin-2,6-dicarbonsäure. Bevorzugt wird hierbei die Nicotinsäure, also Pyridin-3-carbonsäure, verwendet, weil dies bezüglich der Katalysierung der Säure/Epoxid-Reaktion eine sehr reaktive Aminocarbonsäure ist.

Als Komponente a) kann auch vorteilhafterweise das Reaktionsprodukt eines Aminoalkohols mit mindestens einer tert. Aminogruppe und eines Polycarbonsäureanhydrids verwendet werden. Als Beispiel hierfür sei das Reaktionsprodukt aus 2-Hydroxyethylpyridin mit Phthalsäureanhydrid genannt.

Weiterhin kann als Komponente a) das Reaktionsprodukt aus einem Polyamin mit mindestens einer tertiären und mindestens einer primären oder sekundären, bevorzugt sekundären, Aminogruppe und einem Polycarbonsäureanhydrid verwendet werden.

Geeignete Alkoholkomponenten b) zur Herstellung des Polyesters (A2) sind mehrwertige Alkohole, wie Ethylenglykol, Propandiole, Butandiole, Pentandiole, Hexandiole, Neopentylglykol, Diethylenglykol, Cyclohexandimethanol, Trimethylpentandiol, Ditrimethylolpropan, Trimethylolethan, Trimethylolpropan, Glycerin, Pentaerythrit, Dipentaerythrit, Trishydroxyethylisocyanurat, Polyethylenglykol, Polypropylenglykol, gegebenenfalls zusammen mit einwertigen Alkoholen, wie beispielsweise Butanol, Octanol, Laurylalkohol, ethoxylierten bzw. propoxylierten Phenolen.

Als Alkoholkomponente b) können bevorzugt u.a. oder auch ausschließlich Aminoalkohole mit mindestens einer tert. Aminogruppe verwendet werden. Als Beispiel hierfür seien 2-Hydroxyethylpyridin, Dimethylaminopropanol, Methyldiethanolamin, Methyldipropanolamin und Dihydroxyethylanilin genannt. Ebenfalls bevorzugt werden als Alkoholkomponente b) Umsetzungsprodukte von Epoxidharzen mit Carbonsäuren und/ oder Aminen eingesetzt.

Als Alkoholkomponente b) kann so das Umsetzungsprodukt von niedrigmolekularen Epoxidharzen mit Polycarbonsäuren und/oder Polycarbonsäureanhydriden und Aminocarbonsäuren mit mindestens einer tertiären Aminogruppe und/oder Polyaminen mit mindestens einer tertiären und mindestens einer primären oder sekundären Aminogruppe verwendet werden, wobei anschließend gegebenenfalls noch mit der Säure- und der Alkoholkomponente verestert und gegebenenfalls mit Polyisocyanaten modifiziert wird. Unter niedrigmolekularen Epoxidharzen sind Epoxidharze mit einem Molekulargewicht unter etwa 2000 zu verstehen.

Bei Verwendung von Epoxidharzen sollten chlorarme Typen eingesetzt werden, da sonst eine starke Verfärbung der Produkte auftreten kann.

Als modifizierende Komponente c) werden bevorzugt Polyisocyanate und/oder Diepoxidverbindungen, gegebenenfalls auch Monoisocyanate und/oder Monoepoxidverbindungen verwendet. Geeignete Polyisocyanate sind beispielsweise die Toluylendiisocyanate, Hexamethylendiisocyanat sowie Isophorondiisocyanat. Unter Diepoxidverbindungen sind Epoxidharze mit im Mittel etwa zwei Epoxidgruppen pro Molekül zu verstehen. Geeignete Monoepoxidverbindungen sind beispielsweise Olefinoxide, wie Octylenoxid, Butylglycidylether, Allylglycidylether, Phenylglycidylether, p-Butylphenolglycidylether, Kresylglycidylether, Styryloxid, Glycidylmethacrylat, Cyclohexenvinylmonoxid, Dipentenmonoxid, $\alpha$-Pinenoxid sowie Glycidylester von tertiären Carbonsäuren.

Als mit dem Reaktionsprodukt aus a), b) und gegebenenfalls c) reaktionsfähige Komponenten (d) werden bevorzugt Monoisocyanate mit mindestens einer tertiären Aminogruppe verwendet. Diese können beispielsweise durch Umsetzung von geeigneten Diisocyanaten, wie Isophorondiisocyanat, mit Aminoalkoholen mit einer tertiären Aminogruppe, wie beispielsweise Hydroxyethylpyridin oder Dimethylaminoethanol, oder mit Polyaminen mit mindestens einer tertiären und mindestens einer sekundären oder primären Aminogruppe hergestellt werden. Die Monoisocyanate werden durch Reaktion mit freien Hydroxylgruppen des Polykondensations- und/oder Additionsproduktes unter Ausbildung einer Urethanbindung an das Bindemittelsystem gebunden.

Als Komponente d) können auch Polyamine mit mindestens einer tertiären und mindestens einer primären oder sekundären Aminogruppe verwendet werden. Als Beispiel hierfür sei Dimethylaminopropylmethylamin genannt.

Als Alkoholkomponente kann auch das Ringöffnungsprodukt von Epoxidharzen mit wasserstoffaktiven Verbindungen verwendet werden. So können z.B. stufenweise zuerst Diepoxide, wie die bekannten Epikotetypen, mit Dicarbonsäuren, wie beispielsweise Pyridin-2,6-dicarbonsäure, zu einem Vorprodukt umgesetzt werden, welches dann als Alkoholkomponente weiter eingesetzt wird.

Weitere zum Aufbau des Polyesterharzes (A2) geeignete Komponenten a) bis d) sind der deutschen Patentanmeldung 36 29 470 zu entnehmen.

Erfindungswesentlich ist in jedem Fall, daß das erhaltene Endprodukt eine Säurezahl im Bereich von 10 bis 160, bevorzugt von 20 bis 120, und eine Aminzahl im Bereich von 3 bis 90, bevorzugt 10 bis 60, aufweist.

Durch Zugabe von Antioxidantien oder Reduktionsmitteln, wie z.B. unterphosphorige Säure, wird eine zu starke Verfärbung der Produkte während der Kondensation vermieden.

Die Herstellung der Carboxyl- und tertiäre Aminogruppen enthaltenden Polyester und Acrylate erfolgt aus den genannten Verbindungen in üblicher Weise.

Für alle zweistufigen Varianten, bei denen ein cyclisches Säureanhydrid an ein hydroxylgruppenhaltiges Polymer addiert wird, ist es bevorzugt, die Anlösung des Harzes nach der Addition nicht mit primären, sondern mit sekundären oder tertiären Alkoholen durchzuführen, um so die als Nebenreaktion ablaufende Alkoholyse der Halbesterbindung zurückzudrängen.

Es ist erfindungswesentlich, daß die carboxyl- und aminogruppenhaltige Komponente (A) des Überzugsmittels eine Mischung aus dem beschriebenen Acrylatharz (Komponente A1) mit einer Säurezahl von 20 bis 140, bevorzugt 30 bis 90, und einer Aminzahl von 5 bis 60, bevorzugt 10 bis 40, und dem beschriebenen Polyesterharz (Komponente A2) mit einer Säurezahl von 10 bis 160, bevorzugt 20 bis 120, und einer Aminzahl von 3 bis 90, bevorzugt 10 bis 60, darstellt. Das Mischungsverhältnis beträgt 10 bis 90 Gew.% Polyacrylat (A1) und 90 bis 10 Gew.% Polyester (A2). Vorzugsweise liegt das Mischungsverhältnis aber bei 40 bis 90 Gew.% Polyacrylat (A1) und 10 bis 60 Gew.% Polyester (A2), da bei diesen Mischungsverhältnissen Überzüge mit besonders guten Eigenschaften resultieren.

Als Vernetzungsmittel enthält das erfindungsgemäße Überzugsmittel ein Epoxidharz (B) mit im Mittel mehr als einer Epoxidgruppe pro Molekül, wobei das Verhältnis der freien Carboxylgruppen der Komponente (A) zur Anzahl der Epoxidgruppen des Epoxidharzes im Bereich von 1:3 bis 3:1 liegt. Beispiele für geeignete Epoxidharze sind Kondensationsprodukte aus Epichlorhydrin und Bisphenol A, Beispielsweise cycloaliphatische Bisepoxide, epoxidierte Polybutadiene, die durch Reaktion von handelsüblichen Polybutadienölen mit Persäuren bzw. organischen Säure-$H_2O_2$-Mischungen entstehen, Epoxidierungsprodukte natürlich vorkommender Fette, Öle, Fettsäurederivate, modifizierter Öle, epoxidgruppenhaltige Novolake, Glycidylether eines mehrwertigen Alkohols, z.B. Ethylenglykoldiglycidylether, Glycerinpolyglycidylether, Sorbitolpolyglycidylether, Trimethylolpropanpolyglycidylether und Pentaerythritpolyglycidylether sowie geeignete Acrylatharze mit seitenständigen Oxirangruppen. Des weiteren können auch vorteilhaft als Vernetzungsmittel Umsetzungsprodukte von hydroxylgruppenhaltigen Polyepoxiden mit Di- oder Polyisocyanaten eingesetzt werden, wie sie z.B. durch Umsetzung OH-funktioneller Epoxide, wie z.B. von Sorbitolpolyglycidylethern, mit Isophorondiisocyanat entstehen.

Ebenfalls als bevorzugte Vernetzungsmittel eingesetzt werden polare Epoxide, beispielsweise auf der Basis eines Umsetzungsproduktes von Melaminharzen mit Acrylamid unter anschließender Epoxidierung der Acryl-Doppelbindung. Beispielhaft für diese Substanzklasse sei das Handelsprodukt Santolink LSE 4103 der Firma Monsanto genannt, bei dem das Epoxidharzgrundgerüst ein zweikerniges Melamin ist, das Molekulargewicht bei ca. 1200 liegt und das Epoxid-Äquivalentgewicht bei ca. 300 liegt.

Für die erfindungsgemäßen Überzugsmittel geeignete Lösungsmittel (Komponente C)) sind beispielsweise Toluol, Xylol, Butanol, Ethylacetat, Butylacetat, Pentylacetat, Glutarsäuredimethylester, Bernsteinsäuredimethylester, 1-Methoxypropyl-2-acetat, 2-Ethylhexanol, Ethylenglykoldiacetat, Ethylenglykolmonoethyl- und -butylether oder deren Acetate, Ethylenglykoldimethylether, Diethylenglykoldimethylether, Aromaten enthaltende Benzine, Cyclohexanon, Methylethylketon, Aceton, Acetoxyglykolsäurebutylester, Acetoxyglykolsäureethylester.

Diese Lösungsmittel können einzeln oder auch als Mischung verschiedener Lösungsmittel eingesetzt werden.

Die erfindungsgemäßen Überzugsmittel können außerdem als Komponente (D) gegebenenfalls Pigmente sowie Hilfs- und Zusatzstoffe enthalten. Geeignete Zusatzstoffe und Hilfsmittel sind beispielsweise Füllstoffe, wie z.B. Talkum, Glimmer, Kaolin, Kreide, Quarzmehl, Asbestmehl, Bariumsulfat, Silikate, Glasfasern, und Antiabsetzmittel, wie beispielsweise fein verteilte Kieselsäure, Bentonit, Kolloide Silikate und dergleichen.

Die erfindungsgemäßen Überzugsmittel lassen sich auf die verschiedensten Unterlagen aufbringen. Geeignete Substrate sind beispielsweise Metalle, wie Eisen, Zink, Titan, Kupfer, Aluminium, Stahl, Messing, Bronze, Magnesium oder dergleichen, weiter Keramik, Holz, Glas, Beton, Kunststoffe.

Die erfindungsgemäßen Überzugsmittel härten bei relativ niedriger Temperatur, d.h. bei Raumtemperatur oder etwas erhöhten Temperaturen. Die niedrige Härtungstemperatur sowie die kurze Härtungszeit sind auf das Vorliegen eines internen Katalysators im Bindemittelsystem zurückzuführen. Sind kurze Härtungszeiten und niedrige Härtungstemperaturen erwünscht, so wird eine Komponente (A) mit einer relativ hohen Aminzahl eingesetzt.

Die erfindungsgemäßen Überzugsmittel führen zu Überzügen mit verbesserter Beständigkeit gegen Wasser, Wasserdampf und insbesondere gegen organische Lösungsmittel sowie zu Überzügen mit verbesserter Elastizität. Im Vergleich zu Überzugsmitteln auf der Basis Carboxyl- und tert. Aminogruppen enthaltender Polyester/Epoxid oder auf der Basis Carboxy- und tert. Aminogruppen enthaltender Acrylate/Epoxid zeichnen sich die erfindungsgemäßen Kombinationen durch eine gegenüber dem arithmetisch errechneten Mittelwert erniedrigte Viskosität aus.

Durch eine geeignete Auswahl der einzelnen Aufbaukomponenten für das Polyester- und das Acrylatharz sowie durch eine geeignete Auswahl des Mischungsverhältnisses können die Eigenschaften des Endproduktes hervorragend gesteuert werden.

So führt die Verwendung von Cyclohexandicarbonsäure oder anderen Dicarbonsäuren, die nicht nach dem Oxo-Prozeß hergestellt worden sind, zu Produkten mit besonders niedriger Farbzahl, guter Trocknung und Härteentwicklung im Lackfilm.

Durch Mitverwendung geeigneter Monocarbonsäuren zum Aufbau des Polyesters kann ebenfalls ein Einfluß auf Härte und Elastizität genommen werden. Bei Verwendung von Benzoesäure werden relativ harte, bei Verwendung von Fettsäuren dagegen wesentlich weichere Filme erhalten. Der Einsatz von Hexandiolen als Alkoholkomponente führt zu elastischen Filmen, wohingegen die Verwendung von Neopentylglykol und Pentaerythrit zu relativ harten Überzügen führt.

Aromatische tertiäre Aminogruppen im Bindemittelsystem weisen eine höhere katalytische Wirksamkeit auf als aliphatische oder araliphatische Aminogruppen.

Aufgrund der niedrigen Härtungstemperaturen und der kurzen Härtungszeiten werden die erfindungsgemäßen Überzugsmittel bevorzugt verwendet für die Autoreparaturlackierung.

Des weiteren eignen sie sich hervorragend als Decklack, Füller, Klarlack, Primer oder Grundierung.

Die Auswahl des Epoxidharzes richtet sich nach dem Verwendungszweck. Bei der Verwendung als Decklack werden bevorzugt aliphatische Epoxidharze verwendet, für Grundierungen sind auch aromatische Epoxidharze geeignet.

Das bei der Verwendung als Klarlack gegebenenfalls auftretende Problem der Verfärbung kann dadurch umgangen werden, daß bevorzugt aliphatische tertiäre Aminogruppen in das Bindemittelsystem eingebaut werden. Bei Klarlacken sollten chlorarme oder chlorfreie Epoxidharze eingesetzt werden; es treten dann keine Verfärbungserscheinungen auf.

Falls unter Einbrennbedingungen, d.h. bei Temperaturen von mindestens 100 °C, gehärtet werden soll, kann das erfindungsgemäße Überzugsmittel zusätzlich noch ein wärmehärtbares Ether- und/oder Amino- und/oder OH-Gruppen enthaltendes Kunstharz, wie z.B. Phenol- oder Aminoharze, enthalten.

Die vorliegende Erfindung betrifft auch ein Verfahren zur Herstellung von Überzugsmitteln, bei dem

A) eine carboxyl- und aminogruppenhaltige Komponente (A),

B) ein Epoxidharz als Vernetzer mit im Mittel mehr als einer Epoxidgruppe pro Molekül,

C) ein oder mehrere organische Lösungsmittel,

D) gegebenenfalls Pigmente, übliche Hilfsstoffe und Additive,

gemischt und ggf. dispergiert werden, wobei das Verhältnis der freien Carboxylgruppen der Komponente (A) zur Anzahl der Epoxidgruppen im Bereich von 1 : 3 bis 3 : 1 liegt, dadurch gekennzeichnet, daß die Komponente (A) besteht aus

1) 10 bis 90 Gew.-% eines carboxyl- und aminogruppenhaltigen Polyacrylates (A1) mit einer Säurezahl von 20 bis 140, bevorzugt 30 bis 90, einer Aminzahl von 5 bis 60, bevorzugt 10 bis 40,

2) 90 bis 10 Gew.-% eines carboxyl- und aminogruppenhaltigen Polyesters (A2) mit einer Säurezahl von 10 bis 160, bevorzugt 20 bis 120 und einer Aminzahl von 3 bis 90, vorzugsweise 10 bis 60, wobei der Polyester (A2) erhältlich ist durch Umsetzung von

a) Polycarbonsäuren oder deren Anhydriden, gegebenenfalls zusammen mit Monocarbonsäuren,

b) Polyolen, gegebenenfalls zusammen mit Monoolen, und gegebenenfalls

c) Polyisocyanaten und/oder Diepoxidverbindungen, gegebenenfalls auch Monoisocyanaten und/oder Monoepoxidverbindungen und gegebenenfalls

d) Monoisocyanaten mit mindestens einer tertiären Aminogruppe oder Polyaminen mit mindestens einer tertiären und mindestens einer primären oder sekundären Aminogruppe, mit der Maßgabe, daß das Endprodukt tertiäre Aminogruppen enthält, die aus der Komponente a) und/oder b) und/oder d) stammen,

wobei die Summe der Komponenten (A1) bis (A2) 100 Gew.-% ergibt.

Für die Verwendung in dem erfindungsgemäßen Verfahren geeignete Verbindungen sind die bereits bei der Beschreibung der erfindungsgemäßen Überzugsmittel aufgeführten Verbindungen.

Die Herstellung der in dem erfindungsgemäßen Verfahren eingesetzten Carboxyl- und tertiäre Aminogruppen enthaltenden Polyester- und Acrylatharze ist ebenfalls bei der Beschreibung der erfindungsgemäßen Überzugsmittel aufgeführt.

Das Herstellen der Überzugsmittel aus den Komponenten (A) bis (D) erfolgt in bekannter Weise durch Mischen und gegebenenfalls Dispergieren der Komponenten (A) bis (D).

Vorteilhafte Ausgestaltungen des erfindungsgemäßen Verfahrens ergeben sich durch die bereits bei der Beschreibung der erfindungsgemäßen Überzugsmittel angeführte qualitative und quantitative Auswahl spezieller Aufbaukomponenten für das Überzugsmittel.

Die nach dem erfindungsgemäßen Verfahren hergestellten Überzugsmittel führen zu Überzügen mit verbesserter Beständigkeit gegen Wasser, Wasserdampf und insbesondere gegen organische Lösungsmittel sowie zu Überzügen mit verbesserter Elastizität. Im Vergleich zu Überzugsmitteln auf der Basis Carboxyl- und tert. Aminogruppen enthaltender Polyester/Epoxid oder auf der Basis Carboxy- und tertiäre Aminogruppen enthaltender Acrylate/Epoxid zeichnen sich die erfindungsgemäßen Kombinationen durch eine gegenüber dem arithmetisch errechneten Mittelwert erniedrigte Viskosität aus.

Nachfolgend wird die Erfindung anhand von Ausführungsbeispielen näher erläutert. Teile bedeuten Gewichts-Teile, sofern nichts anderes angegeben wird.

Beispiel 1:

Herstellung des Polyesterharzes I

In einen 4-Liter-Polykondensationskessel mit Rührer, dampfbeheizter Kolonne und Wasserabscheider werden 446,0 Teile Hexahydrophthalsäureanhydrid, 480,8 Teile Isophthalsäure, 330,6 Teile Trimethylolpropan, 269,9 Teile Pentaerythrit-R, 229,8 Teile Methyldiethanolamin, 196,3 Teile Benzoesäure, 254,2 Teile Isononansäure, 91,9 Teile Xylol und 2,207 Teile Triisodecylphosphit gegeben und langsam aufgeheizt. Es wird bei einer Temperatur von max. 190 °C bis zu einer Säurezahl von 20 mg KOH/g und einer Viskosität von 7,9 dPas (50%ig in Butylglykol) kondensiert, anschließend wird gekühlt und bei 130 °C mit 410,0 Teilen Xylol angelöst. Zu dieser Lösung werden nun 307,23 Teile Hexahydrophthalsäureanhydrid, 76,0 Teile Xylol und 0,908 Teile Triisodecylphosphit gegeben. Die Addition des Anhydrides erfolgt bei 120 °C, bis eine Säurezahl von 69,8 und eine Viskosität von 18 dPas (50%ig in Butylglykol) erreicht ist. Danach wird mit 798,1 Teilen Xylol und 114,0 Teilen sek. Butanol angelöst.
Der so erhaltene Polyester hat einen Festkörper von 59%, eine Säurezahl von 69,8, eine Aminzahl von 28,8 und eine Farbzahl von 4-5 (Gardner-Holdt).

Beispiel 2:

Herstellung des Polyesterharzes II

In einen 4-Liter-Polykondensationskessel mit Rührer, dampfbeheizter Kolonne und Wasserabscheider werden 482,2 Teile Hexahydrophthalsäureanhydrid, 585,3 Teile 1,4-Cyclohexandicarbonsäure, 611,8 Teile Trimethylolpropan, 123,1 Teile Hexandiol-1,6, 155,2 Teile Methyldiethanolamin, 79,6 Teile Benzoesäure, 206,1 Teile Isononansäure, 87,8 Teile Xylol und 2,196 Teile Triisodecylphosphit gegeben und langsam aufgeheizt. Es wird bei einer Temperatur von max. 190 °C bis zu einer Säurezahl von 9,1 mg KOH/g und einer Viskosität von 4,2 dPas (50%ig in Butylglykol) kondensiert, anschließend wird gekühlt und bei 130 °C mit 387,4 Teilen Xylol angelöst. Zu dieser Lösung werden nun 367,0 Teile Hexahydrophthalsäureanhydrid, 80,9 Teile Xylol und 0,742 Teile Triisodecylphosphit gegeben. Die Addition des Anhydrides erfolgt bei 120 °C, bis eine Säurezahl von 69,4 und eine Viskosität von 8 dPas (50%ig in Butylglykol) erreicht ist. Danach wird mit 718,6 Teilen Xylol und 182,1 Teilen sek. Butanol angelöst. Der so erhaltene Polyester hat einen Festkörper von 59,7% eine Säurezahl von 67 (fest), eine Aminzahl von 31, eine Viskosität (original) von 27,5 dPas und eine Farbzahl von 1-2 (Gardner-Holdt).

Beispiel 3:

Herstellung des Acrylatharzes I

In einen 4-Liter-Edelstahlpolymerisationskessel mit Rührer, Rückflußkühler, zwei Monomerenzuläufen und einem Initiatorzulauf werden eingewogen und auf 110 °C aufgeheizt:
484,0 Teile Xylol und 161,0 Teile 1-Methoxypropylacetat-2.
In den Monomerenzulauf A werden eingewogen:
80,0 Teile Dimethylaminoethylmethacrylat
90,0 Teile Xylol
30,0 Teile 1-Methoxypropylacetat-2
In den Monomerenzulauf B werden eingewogen:
143,0 Teile Methylmethacrylat
120,0 Teile n-Butylacrylat
120,0 Teile Cyclohexylmethacrylat
120,0 Teile 4-Hydroxybutylacrylat
120,0 Teile Hydroxyethylmethacrylat
97,0 Teile Divinylbenzol (62%ig in Ethylstyrol)
22,4 Teile Mercaptoethanol
0,24 Teile Triisodecylphosphit
In den Initiatorzulauf werden eingewogen:
19,2 Teile 2,2'-Azobis(2-methylbutannitril)
58,0 Teile Xylol
19,2 Teile 1-Methoxypropylacetat-2
Mit dem Start aller Zuläufe wird gleichzeitig begonnen, innerhalb von 3 h werden die beiden Monomerenzuläufe gleichmäßig zudosiert, innerhalb von 3,75 h wird der Initiatorzulauf zudosiert. Während der Polymerisation wird die Temperatur im Kessel auf 108 bis 110 °C gehalten. Danach wird noch 2 h nachpolymerisiert. Die so erhaltene Acrylatharzlösung hat einen Festkörper von 51% und eine Viskosität von 24 dPas. Es werden nun 169,0 Teile Hexahydrophthalsäureanhydrid zugegeben und bei 110 °C an das Acrylatharz addiert. Nachdem die Säurezahlbestimmung in wäßriger und alkoholischer KOH gleiche Werte ergeben, wird durch Abdestillieren von Lösemitteln auf 55-56% Festkörper aufkonzentriert und anschließend mit sek. Butanol auf 51% Festkörpergehalt verdünnt. Die so erhaltene Acrylatharzlösung hat eine Säurezahl von 72 und eine Viskosität von 27 dPas sowie eine Aminzahl von 28,6.

Beispiel 4:

Herstellung des Acrylatharzes II

In einen 4-Liter-Edelstahlpolymerisationskessel mit Rührer, Rückflußkühler, zwei Monomerenzuläufen und einem Initiatorzulauf werden eingewogen und auf 110 °C aufgeheizt:
382,0 Teile Xylol und 382,0 Teile 1-Methoxypropylacetat-2
In den Monomerenzulauf A werden eingewogen:
82,0 Teile Dimethylaminoethylmethacrylat
350,0 Teile Hexahydrophthalsäuremono-2-methacryloyloxyethylester
100,0 Teile Xylol
100,0 Teile 1-Methoxypropylacetat-2
In den Monomerenzulauf B werden eingewogen:
148,0 Teile Butylmethacrylat
124,0 Teile n-Butylacrylat
124,0 Teile Cyclohexylmethacrylat
72,0 Teile Hydroxypropylmethacrylat
100,0 Teile Divinylbenzol (62%ig in Ethylstyrol)
24,0 Teile Mercaptoethanol
0,53 Teile Triisodecylphosphit
In den Initiatorzulauf werden eingewogen:
20,0 Teile 2,2'-Azobis(2-methylbutannitril)
40,0 Teile Xylol
40,2 Teile 1-Methoxypropylacetat-2
Mit dem Start der Monomeren-Zuläufe wird gleichzeitig begonnen, der Initiatorzulauf wird 10 min später gestartet. Innerhalb von 3 h werden die beiden Monomerenzuläufe gleichmäßig zudosiert, innerhalb von 3,75 h wird der Initiatorzulauf zudosiert. Während der Polymerisation wird die Temperatur im Kessel auf 108-110 °C gehalten. Danach wird noch 2 h nachpolymerisiert. Durch abdestillieren von Lösemittel wird auf ca. 60% Festkörper aufkonzentriert, danach wird mit sek. Butanol verdünnt. Die so erhaltene Acrylatharzlösung hat einen Festkörper von 51% und eine Säurezahl von 67 sowie eine Aminzahl von 34.

Beispiel 5:

Herstellung von Überzugsmitteln

Diese COOH-Polymeren wurden mit einem aliphatischen Epoxidharz mit einem Molgewicht von ca. 1200 und einem Epoxidequivalentgewicht von ca. 300 vernetzt. Basis dieses Epoxidharzes (Handelsname LSE 4103 der Firma Monsanto) ist ein zweikerniges Melaminharz, umgesetzt mit Acrylamid und anschließend Epoxidierung der Acryl-Doppelbindungen.
Es wurde das Polyesterharz II (Lack 1), das Acrylatharz I (Lack 2) und eine 1:2-Mischung (Lack 3) aus Polyester und Acrylat mit diesem Epoxidharz gemischt.
Die so hergestellten Lackmischungen wurden als Klarlack nach dem Naß-in-Naß-Verfahren auf einen handelsüblichen Silbermetallic-Basislack (Basis CAB, Polyester, Melaminharz, Wachs) appliziert. Die so erhaltenen Klarlacke wurden sofort auf Trocknung geprüft (staubfrei, klebfrei), nach 24 h Trocknung bei Raumtemperatur wurde die Pendelhärte (nach König) und nach 3 Tagen die Elastizität mittels Erichsen-Tiefung bestimmt. Weiterhin wurden durchgeführt:

1) Ein Drucktest:

Ein saugfähiges Papierfasertuch wird 8 Mal gefaltet, so daß ein kleines Quadrat (4x4 cm) entsteht. Dieses wird auf den Film gelegt und mit einem Gewicht von 500 g belastet. Danach wird auf Markierung oder Verletzung des Films bewertet; 1 ist sehr schlecht, 10 ist sehr gut - keine Markierung.

2) Ein Wassertropfentest:

1 ml dest. Wasser wird auf den Klarlack gebracht und in einem 50 °C-Ofen ohne Umluft 4 h einwirken gelassen. Es wird mit Noten von 1 bis 10 bewertet: 10 ist ohne jegliche Markierung, Erweichung oder sonstige Beeinträchtigung des Films.

3) Ein Benzin- und Xyloltest:

Dabei wird 1 ml des Lösemittels an einer im 45°-Winkel aufgestellten Tafel ablaufen gelassen. Es wird nach Markierungen und Erweichungen bewertet, die Benotung läuft von 1 bis 10, wobei 10 ohne jegliche Beeinträchtigung des Films gilt.

Tabelle 1

| Lackrezepturen | | | |
|---|---|---|---|
| Lack | 1 | 2 | 3 |
| Polyester II | 80,0 | - | 27,0 |
| Acrylat I | - | 80,0 | 53,0 |
| Epoxidharz | 27,5 | 27,0 | 26,5 |
| 1-Methoxypropanol-2 | 2,0 | 2,0 | 2,0 |
| Butylacetat 85/100 | 11,5 | 11,5 | 11,5 |
| Xylol | 5,0 | 5,0 | 5,0 |
| Siliconöl | 0,5 | 0,5 | 0,5 |
| Lichtschutzmittel 1 | 0,6 | 0,6 | 0,6 |
| Lichtschutzmittel 2 | 0,4 | 0,4 | 0,4 |
| Anfallviskosität(Auslaufzeit im DIN-4-Becher) | 84" | 140" | 94" |
| Die Mischungen werden mit Lösungsmittel auf 18" (Auslaufzeit DIN 4-Becher) eingestellt. | | | |
| Festkörper bei Spritzviskosität | 34,5% | 27,6% | 31,4% |

Tabelle 2

| Prüfergebnisse | | | |
|---|---|---|---|
| Lack | 1 | 2 | 3 |
| Trocknung | | | |
| staubfrei nach | 60' | 30' | 40' |
| klebfrei nach | 5h20' | 2h | 3h30' |
| Drucktest | 6 | 8 | 8 |
| Wassertropfentest | 5 | 7 | 6-7 |
| Benzintest | 8 | 7 | 8 |
| Xyloltest | 8 | 6 | 9 |
| Erichsen-Tiefung (in mm) | 9,0 | 7,7 | 9,9 |
| Pendelhärte (König) | 74" | 118" | 84" |
| Glanzgrad (20°) | 94% | 91% | 93% |

Wie aus den Versuchen hervorgeht, kann überraschenderweise durch die Mischung der Acrylatharze mit den Polyesterharzen eine Verbesserung des Eigenschaftsniveaus erreicht werden. So wird die Beständigkeit gegen Chemikalien durch die erfindungsgemäße Mischung erhöht, die Elastizität ist besser als die der Einzelkomponenten. Überraschenderweise wird die Viskosität der Lacke durch die Mischung deutlich günstiger, als sie dem rein arithmetischen Mittelwert entspricht. Mittelwert der Anfallviskosität: 120", gefunden in der Mischung 94"; Mittelwert des Festkörpers bei Spritzviskosität 29,9%, gefunden in der Mischung 31,4 %.

**Patentansprüche**

1. Überzugsmittel, enthaltend

A) eine carboxyl- und aminogruppenhaltige Komponente (A),

B) ein Epoxidharz als Vernetzer mit im Mittel mehr als einer Epoxidgruppe pro Molekül,

C) ein oder mehrere organische Lösungsmittel,

D) gegebenenfalls Pigmente, übliche Hilfsstoffe und Additive,

bei dem das Verhältnis der freien Carboxylgruppen der Komponente (A) zur Anzahl der Epoxidgruppen im Bereich von 1 : 3 bis 3 : 1 liegt,

dadurch gekennzeichnet, daß die Komponente (A) besteht aus

1) 10 bis 90 Gew.-% eines carboxyl- und aminogruppenhaltigen Polyacrylates (A1) mit einer Säurezahl von 20 bis 140, bevorzugt 30 bis 90, und einer Aminzahl von 5 bis 60, bevorzugt 10 bis 40,

2) 90 bis 10 Gew.-% eines carboxyl- und aminogruppenhaltigen Polyesters (A2) mit einer Säurezahl von 10 bis 160, bevorzugt 20 bis 120, und einer Aminzahl von 3 bis 90, vorzugsweise 10 bis 60, wobei der Polyester (A2) erhältlich ist durch Umsetzung von

a) Polycarbonsäuren oder deren Anhydriden, gegebenenfalls zusammen mit Monocarbonsäuren,

b) Polyolen, gegebenenfalls zusammen mit Monoolen, und gegebenenfalls

c) Polyisocyanaten und/oder Diepoxidverbindungen, gegebenenfalls auch Monoisocyanaten und/oder Monoepoxidverbindungen und gegebenenfalls

d) Monoisocyanaten mit mindestens einer tertiären Aminogruppe oder Polyaminen mit mindestens einer tertiären und mindestens einer primären oder sekundären Aminogruppe,

mit der Maßgabe, daß das Endprodukt tertiäre Aminogruppen enthält, die aus der Komponente a) und/oder b) und/oder d) stammen,

wobei die Summe der Komponenten (A1) bis (A2) 100 Gew.-% ergibt.

2. Überzugsmittel nach Anspruch 1, dadurch gekennzeichnet, daß die Komponente (A) besteht aus

1) 40 bis 90 Gew.-% des Polyacrylates (A1) und

2) 10 bis 60 Gew.-% des Polyesters (A2),

wobei die Summe der Komponenten (A1) bis (A2) 100 Gew.-% ergibt.

3. Überzugsmittel nach Anspruch 1 oder 2, dadurch gekennzeichnet, daß als Komponente a) zur Herstellung des Polyesters (A2) Aminocarbonsäuren mit mindestens einer tertiären Aminogruppe verwendet werden.

4. Überzugsmittel nach Anspruch 1 oder 2, dadurch gekennzeichnet, daß als Komponente a) zur Herstellung des Polyesters (A2) Cyclohexandicarbonsäure verwendet wird.

5. Überzugsmittel nach Anspruch 1 oder 2, dadurch gekennzeichnet, daß als Komponente a) zur Herstellung des Polyesters (A2) das Reaktionsprodukt eines mindestens eine tertiäre Aminogruppe enthaltenden Aminoalkohols mit einem Polycarbonsäureanhydrid verwendet wird.

6. Überzugsmittel nach Anspruch 1 bis 5, dadurch gekennzeichnet, daß als Komponente b) zur Herstellung des Polyesters (A2) Aminoalkohole mit mindestens einer tertiären Aminogruppe verwendet werden.

7. Überzugsmittel nach Anspruch 1 bis 5, dadurch gekennzeichnet, daß als Komponente b) zur Herstellung des Polyesters (A2) Umsetzungsprodukte von Epoxidharzen mit Carbonsäuren und/oder Aminen verwendet werden.

8. Überzugsmittel nach Anspruch 1 bis 7, dadurch gekennzeichnet, daß das Polyacrylat (A1) eine OH-Zahl größer 20 aufweist.

9. Überzugsmittel nach Anspruch 1 bis 8, dadurch gekennzeichnet, daß das Polyacrylat (A1) durch Umsetzen eines hydroxylgruppenhaltigen Acrylatharzes mit Verbindungen, die pro Molekül durchschnittlich 0,8 bis 1,5, vorzugsweise eine, freie Isocyanatgruppe und mindestens eine tertiäre Aminogruppe enthalten, hergestellt wird.

**10.** Überzugsmittel nach Anspruch 1 bis 9, dadurch gekennzeichnet, daß als Polyacrylat (A1) ein lösliches, vorvernetztes Acrylatcopolymerisat eingesetzt wird.

**11.** Überzugsmittel nach Anspruch 1 bis 10, dadurch gekennzeichnet, daß die Carboxylgruppen in die Komponente (A) hauptsächlich oder vollständig durch Addition von cyclischen Säureanhydriden an ein OH-Polymer eingeführt werden und daß die Anlösung des Harzes nach dieser Addition mit sekundären und/oder tertiären Alkoholen durchgeführt wird.

**12.** Verfahren zur Herstellung von Überzugsmitteln, bei dem
    A) eine carboxyl- und aminogruppenhaltige Komponente (A),
    B) ein Epoxidharz als Vernetzer mit im Mittel mehr als einer Epoxidgruppe pro Molekül,
    C) ein oder mehrere organische Lösungsmittel,
    D) gegebenenfalls Pigmente, übliche Hilfsstoffe und Additive,
gemischt und ggf. dispergiert werden, wobei das Verhältnis der freien Carboxylgruppen der Komponente (A) zur Anzahl der Epoxidgruppen im Bereich von 1 : 3 bis 3 : 1 liegt, dadurch gekennzeichnet, daß die Komponente (A) besteht aus
    1) 10 bis 90 Gew.-% eines carboxyl- und aminogruppenhaltigen Polyacrylates (A1) mit einer Säurezahl von 20 bis 140, bevorzugt 30 bis 90, einer Aminzahl von 5 bis 60, bevorzugt 10 bis 40,
    2) 90 bis 10 Gew.-% eines carboxyl- und aminogruppenhaltigen Polyesters (A2) mit einer Säurezahl von 10 bis 160, bevorzugt 20 bis 120 und einer Aminzahl von 3 bis 90, vorzugsweise 10 bis 60, wobei der Polyester (A2) erhältlich ist durch Umsetzung von
        a) Polycarbonsäuren oder deren Anhydriden, gegebenenfalls zusammen mit Monocarbonsäuren,
        b) Polyolen, gegebenenfalls zusammen mit Monoolen, und gegebenenfalls
        c) Polyisocyanaten und/oder Diepoxidverbindungen, gegebenenfalls auch Monoisocyanaten und/oder Monoepoxidverbindungen und gegebenenfalls
        d) Monoisocyanaten mit mindestens einer tertiären Aminogruppe oder Polyaminen mit mindestens einer tertiären und mindestens einer primären oder sekundären Aminogruppe, mit der Maßgabe, daß das Endprodukt tertiäre Aminogruppen enthält, die aus der Komponente a) und/oder b) und/oder d) stammen,
    wobei die Summe der Komponenten (A1) bis (A2) 100 Gew.-% ergibt.

**13.** Verfahren nach Anspruch 12, dadurch gekennzeichnet, daß die Komponente (A) besteht aus
    1) 40 bis 90 Gew.-% des Polyacrylates (A1) und
    2) 10 bis 60 Gew.-% des Polyesters (A2),
wobei die Summe der Komponenten (A1) bis (A2) 100 Gew.-% ergibt.

**14.** Verfahren nach Anspruch 12 oder 13, dadurch gekennzeichnet, daß als Komponente a) zur Herstellung des Polyesters (A2) Aminocarbonsäuren mit mindestens einer tertiären Aminogruppe verwendet werden.

**15.** Verfahren nach Anspruch 12 oder 13, dadurch gekennzeichnet, daß als Komponente a) zur Herstellung des Polyesters (A2) Cyclohexandicarbonsäure verwendet wird.

**16.** Verfahren nach Anspruch 12 oder 13, dadurch gekennzeichnet, daß als Komponente a) zur Herstellung des Polyesters (A2) das Reaktionsprodukt eines mindestens eine tertiäre Aminogruppe enthaltenden Aminoalkohols mit einem Polycarbonsäureanhydrid verwendet wird.

**17.** Verfahren nach Anspruch 12 bis 16, dadurch gekennzeichnet, daß als Komponente b) zur Herstellung des Polyesters (A2) Aminoalkohole mit mindestens einer tertiären Aminogruppe verwendet werden.

**18.** Verfahren nach Anspruch 12 bis 16, dadurch gekennzeichnet, daß als Komponente b) zur Herstellung des Polyesters (A2) Umsetzungsprodukte von Epoxidharzen mit Carbonsäuren und/oder Aminen verwendet werden.

**19.** Verfahren nach Anspruch 12 bis 18, dadurch gekennzeichnet, daß das Polyacrylat (A1) eine OH-Zahl größer 20 aufweist.

**20.** Verfahren nach Anspruch 12 bis 19, dadurch gekennzeichnet, daß das Polyacrylat (A1) durch Umsetzen eines hydroxylgruppenhaltigen Acrylatharzes mit Verbindungen, die pro Molekül durchschnittlich 0,8 bis 1,5, vorzugsweise eine, freie Isocyanatgruppe und mindestens eine tertiäre Aminogruppe enthalten, hergestellt wird.

21. Verfahren nach Anspruch 12 bis 20, dadurch gekennzeichnet, daß als Polyacrylat (A1) ein lösliches, vorvernetztes Acrylatcopolymerisat eingesetzt wird.

22. Verfahren nach Anspruch 12 bis 21, dadurch gekennzeichnet, daß die Carboxylgruppen in die Komponente (A) hauptsächlich oder vollständig durch Addition von cyclischen Säureanhydriden an ein OH-Polymer eingeführt werden und daß die Anlösung des Harzes nach dieser Addition mit sekundären und/oder tertiären Alkoholen durchgeführt wird.

23. Verwendung der Überzugsmittel nach Anspruch 1 bis 11 für die Reparaturlackierung von Autokarossen.

24. Verwendung der Überzugsmittel nach Anspruch 1 bis 11 als Decklack, Füller, Klarlack, Primer oder Grundierung.

**Claims**

1. Coating agent containing
   A) a carboxyl- and amino-containing component (A),
   b) an epoxy resin as crosslinking agent having on average more than one epoxy group per molecule,
   C) one or more organic solvents,
   D) if desired, pigments, customary auxiliaries and additives,
   in which the ratio of the free carboxyl groups of component (A) to the number of epoxy groups is in the range from 1:3 to 3:1, characterised in that component (A) consists of
   1) 10 to 90% by weight of a carboxyl- and amino-containing polyacrylate (A1) having an acid number of 20 to 140, preferably 30 to 90, and an amine number of 5 to 60, preferably 10 to 40,
   2) 90 to 10% by weight of a carboxyl- and amino-containing polyester (A2) having an acid number of 10 to 160, preferably 20 to 120, and an amine number of 3 to 90, preferably 10 to 60, where the polyester (A2) is obtainable by reaction of
      a) polycarboxylic acids or anhydrides thereof, if desired together with monocarboxylic acids,
      b) polyols, if desired together with monools, and, if desired
      c) polyisocyanates and/or diepoxy compounds, if desired also monoisocyanates and/or monoepoxy compounds and if desired
      d) monoisocyanates having at least one tertiary amino group or polyamines having at least one tertiary and at least one primary or secondary amino group, with the proviso that the final product contains tertiary amino groups originating from component a) and/or b) and/or d),
   the sum of the components (A1) to (A2) amounting to 100% by weight.

2. Coating agent according to Claim 1, characterised in that component (A) consists of
   1) 40 to 90% by weight of polyacrylate (A1) and
   2) 10 to 60% by weight of polyester (A2),
   the sum of components (A1) to (A2) being 100% by weight.

3. Coating agent according to Claim 1 or 2, characterised in that the component a) used for the preparation of polyester (A2) comprises aminocarboxylic acids having at least one tertiary amino group.

4. Coating agent according to Claim 1 or 2, characterised in that component a) used for the preparation of polyester (A2) is cyclohexanedicarboxylic acid.

5. Coating agent according to Claim 1 or 2, characterised in that component a) used for the preparation of polyester (A2) is the reaction product of an amino alcohol containing at least one tertiary amino group with a polycarboxylic anhydride.

6. Coating agent according to Claims 1 to 5, characterised in that component b) used for the preparation of polyester (A2) comprises amino alcohols having at least one tertiary amino group.

13

EP 0 330 887 B1

**7.** Coating agent Claims 1 to 5, characterised in that component b) used for the preparation of polyester (A2) comprises reaction products of epoxy resins with carboxylic acids and/or amines.

**8.** Coating agent according to Claims 1 to 7, characterised in that polyacrylate (A1) has an OH number of more than 20.

**9.** Coating agent according to Claims 1 to 8, characterised in that polyacrylate (A1) is prepared by reaction of a hydroxyl-containing acrylate resin with compounds containing on average 0.8 to 1.5, preferably one, free isocyanate group and at least one tertiary amino group per molecule.

**10.** Coating agent according to Claims 1 to 9, characterised in that the polyacrylate (A1) used is a soluble pre-crosslinked acrylate copolymer.

**11.** Coating agent according to Claims 1 to 10, characterised in that the carboxyl groups are introduced into component (A) mainly or completely by addition of cyclic acid anhydrides onto an OH polymer and the partial dissolution the resin after this addition reaction is carried out using secondary and/or tertiary alcohols.

**12.** Process for the preparation of coating agents in which
A) a carboxyl- and amino-containing component (A),
B) an epoxy resin as crosslinking agent having on average more than one epoxy group per molecule,
C) one or more organic solvents,
D) if desired, pigments, customary auxiliaries and additives,
 are mixed and, if desired, dispersed, the ratio of free carboxyl groups of component (A) to the number of epoxy groups being in the range from 1:3 to 3:1, wherein component (A) consists of
1) 10 to 90% by weight of a carboxyl- and amino-containing polyacrylate (A1) having an acid number of 20 to 140, preferably 30 to 90, an amine number of 5 to 60, preferably 10 to 40,
2) 90 to 10% by weight of a carboxyl- and amino-containing polyester (A2) having an acid number of 10 to 160, preferably 20 to 120, and an amine number of 3 to 90, preferably 10 to 60, where the polyester (A2) is obtainable by reaction of
a) polycarboxylic acids or anhydrides thereof, if desired together with monocarboxylic acids,
b) polyols, if desired together with monools, and, if desired,
c) polyisocyanates and/or diepoxy compounds, if desired also monoisocyanates and/or monoepoxy compounds and if desired
d) monoisocyanates having at least one tertiary amino group or polyamines having at least one tertiary and at least one primary or secondary amino group, with the proviso that the final product contains tertiary amino groups originating from component a) and/or b) and/or d),
the sum of the components (A1) to (A2) amounting to 100% by weight.

**13.** Process according to Claim 12, characterised in that component (A) consists of
1) 40 to 90% by weight of polyacrylate (A1) and
2) 10 to 60% by weight of polyester (A2),
the sum of components (A1) to (A2) being 100% by weight.

**14.** Process according to Claim 12 or 13, characterised in that the component a) used for the preparation of polyester (A2) comprises aminocarboxylic acids having at least one tertiary amino group.

**15.** Process according to Claim 12 or 13, characterised in that component a) used for the preparation of polyester (A2) is cyclohexanedicarboxylic acid.

**16.** Process according to Claim 12 or 13, characterised in that component a) used for the preparation of polyester (A2) is the reaction product of an amino alcohol containing at least one tertiary amino group with a polycarboxylic anhydride.

**17.** Process according to Claim 12 to 16, characterised in that component b) used for the preparation of polyester (A2) comprises amino alcohols having at least one tertiary amino group.

14

**18.** Process according to Claims 12 to 16, characterised in that component b) used for the preparation of polyester (A2) comprises reaction products of epoxy resins with carboxylic acids and/or amines.

**19.** Process according to Claims 12 to 18, characterised in that polyacrylate (A1) has an OH number of more than 20.

**20.** Process according to Claims 12 to 19, characterised in that polyacrylate (A1) is prepared by reaction of a hydroxyl-containing acrylate resin with compounds containing on average 0.8 to 1.5, preferably one, free isocyanate group and at least one tertiary amino group per molecule.

**21.** Process according to Claims 12 to 20, characterised in that the polyacrylate (A1) used is a soluble precrosslinked acrylate copolymer.

**22.** Process according to Claims 12 to 21, characterised in that the carboxyl groups are introduced into component (A) mainly or completely by addition of cyclic acid anhydrides onto an OH polymer and the partial dissolution of the resin after this addition reaction is carried out using secondary and/or tertiary alcohols.

**23.** Use of the coating agents according to Claims 1 to 11 for repair coating of automotive bodies.

**24.** Use of the coating agents according to Claims 1 to 11 as topcoat, filler, clearcoat, primer or basecoat.

**Revendications**

**1.** Agents de revêtement contenant :
(A) un composant (A) contenant des groupes carboxyle et amino ;
(B) une résine époxydique en tant que réticulant, présentant, en moyenne, plus d'un groupe époxyde par molécule;
(C) un ou plusieurs solvants organiques ;
(D) le cas échéant, des pigments, des adjuvants et additifs usuels ;
dans lequel le rapport des groupes carboxyle libres du composant (A) au nombre des groupes époxyde se situe dans la plage de 1 : 3 à 3 : 1,
caractérisés par le fait que le composant (A) se compose de :
(1) 10 à 90% en poids d'un polyacrylate (A1) contenant des groupes carboxyle et amino, et présentant un indice d'acide de 20 à 140, de préférence, de 30 à 90, et un indice d'amine de 5 à 60, de préférence, de 10 à 40 ;
(2) 90 à 10% en poids d'un polyester (A2) contenant des groupes carboxyle et amino, et présentant un indice d'acide de 10 à 160, de préférence, de 20 à 120, et un indice d'amine de 3 à 90, de préférence, de 10 à 60, le polyester (A2) pouvant être obtenu par réaction :
(a) d'acides polycarboxyliques ou de leurs anhydrides, le cas échéant conjointement avec des acides monocarboxyliques ;
(b) de polyols, le cas échéant conjointement avec des monoalcools, et, le cas échéant
(c) de polyisocyanates et/ou de composés diépoxydiques, le cas échéant également de monoisocyanates et/ou de composés monoépoxydiques, et, le cas échéant
(d) de monoisocyanates présentant au moins un groupe amino tertiaire ou de polyamines présentant au moins un groupe amino tertiaire et au moins un groupe amino primaire ou secondaire ;
avec la condition que le produit final contienne des groupes amino tertiaires, qui sont issus du composant (a) et/ou (b) et/ou (d),
la somme des composants (A1) et (A2) s'élevant à 100% en poids.

**2.** Agents de revêtement selon la revendication 1, caractérisés par le fait que le composant (A) se compose de :
(1) 40 à 90% en poids du polyacrylate (A1) ; et
(2) 10 à 60% en poids du polyester (A2),
la somme des composants (A1) et (A2) s'élevant à 100% en poids.

**3.** Agents de revêtement selon l'une quelconque des revendications 1 et 2, caractérisés par le fait que,

15

comme composant (a) pour la préparation du polyester (A2), sont utilisés des acides aminocarboxyliques présentant au moins un groupe amino tertiaire.

4. Agents de revêtement selon l'une quelconque des revendications 1 et 2, caractérisés par le fait que, comme composant (a) pour la préparation du polyester (A2), est utilisé l'acide cyclohexane dicarboxylique.

5. Agents de revêtement selon l'une quelconque des revendications 1 et 2, caractérisés par le fait que, comme composant (a) pour la préparation du polyester (A2), est utilisé le produit de réaction d'un aminoalcool contenant au moins un groupe amino tertiaire, avec un anhydride d'acide polycarboxylique.

6. Agents de revêtement selon l'une quelconque des revendications 1 à 5, caractérisés par le fait que, comme composant (b) pour la préparation du polyester (A2), sont utilisés des aminoalcools présentant au moins un groupe amino tertiaire.

7. Agents de revêtement selon l'une quelconque des revendications 1 à 5, caractérisés par le fait que, comme composant (b) pour la préparation du polyester (A2), sont utilisés des produits de réaction de résines époxydiques avec des acides carboxyliques et/ou des amines.

8. Agents de revêtement selon l'une quelconque des revendications 1 à 7, caractérisés par le fait que le polyacrylate (A1) présente un indice d'OH supérieur à 20.

9. Agents de revêtement selon l'une quelconque des revendications 1 à 8, caractérisés par le fait que le polyacrylate (A1) est obtenu par réaction d'une résine d'acrylate contenant des groupes hydroxyle, avec des composés qui contiennent, par molécule, en moyenne 0,8 à 1,5, de préférence un, groupe isocyanate libre, et au moins un groupe amino tertiaire.

10. Agents de revêtement selon l'une quelconque des revendications 1 à 9, caractérisés par le fait que, comme polyacrylate (A1), est utilisé un copolymère d'acrylate préréticulé, soluble.

11. Agents de revêtement selon l'une quelconque des revendications 1 à 10, caractérisés par le fait que les groupes carboxyle du composant (A) sont introduits principalement ou totalement par addition sur un polymère OH d'anhydrides d'acides cycliques, et que la solubilisation de la résine après cette addition est conduite avec des alcools secondaires et/ou tertiaires.

12. Procédé de préparation d'agents de revêtement suivant lequel on mélange, et, le cas échéant, on disperse :
    (A) un composant (A) contenant des groupes carboxyle et amino ;
    (B) une résine époxydique en tant que réticulant, présentant, en moyenne, plus d'un groupe époxyde par molécule ;
    (C) un ou plusieurs solvants organiques ;
    (D) le cas échéant des pigments, des adjuvants et additifs usuels,
    le rapport des groupes carboxyle libres du composant (A) au nombre des groupes époxyde se situant dans la plage de 1 : 3 à 3 : 1,
    caractérisé par le fait que le composant (A) se compose de :
    (1) 10 à 90% en poids d'un polyacrylate (A1) contenant des groupes carboxyle et amino, et présentant un indice d'acide de 20 à 140, de préférence, de 30 à 90, et un indice d'amine de 5 à 60, de préférence, de 10 à 40 ;
    (2) 90 à 10% en poids d'un polyester (A2) contenant des groupes carboxyle et amino, et présentant un indice d'acide de 10 à 160, de préférence, de 20 à 120, et un indice d'amine de 3 à 90, de préférence, de 10 à 60, le polyester (A2) pouvant être obtenu par réaction :
        (a) d'acides polycarboxyliques ou de leurs anhydrides, le cas échéant conjointement avec des acides monocarboxyliques ;
        (b) de polyols, le cas échéant conjointement avec des monoalcools, et, le cas échéant
        (c) de polyisocyanates et/ou de composés diépoxydiques, le cas échéant également de monoisocyanates et/ou de composés monoépoxydiques, et, le cas échéant
        (d) de monoisocyanates présentant au moins un groupe amino tertiaire ou de polyamines présentant au moins un groupe amino tertiaire et au moins un groupe amino primaire ou

16

secondaire ;

avec la condition que le produit final contienne des groupes amino tertiaires, qui sont issus du composant (a) et/ou (b) et/ou (d),

la somme des composants (A1) et (A2) s'élevant à 100% en poids.

13. Procédé selon la revendication 12, caractérisé par le fait que le composant (A) se compose de :
(1) 40 à 90% en poids du polyacrylate (A1) ; et
(2) 10 à 60% en poids du polyester (A2),
la somme des composants (A1) et (A2) s'élevant à 100% en poids.

14. Procédé selon l'une quelconque des revendications 12 et 13, caractérisé par le fait que, comme composant (a) pour la préparation du polyester (A2), sont utilisés des acides aminocarboxyliques présentant au moins un groupe amino tertiaire.

15. Procédé selon l'une quelconque des revendications 12 et 13, caractérisé par le fait que, comme composant (a) pour la préparation du polyester (A2), est utilisé l'acide cyclohexane dicarboxylique.

16. Procédé selon l'une quelconque des revendications 12 et 13, caractérisé par le fait que, comme composant (a) pour la préparation du polyester (A2), est utilisé le produit de réaction d'un aminoalcool contenant au moins un groupe amino tertiaire, avec un anhydride d'acide polycarboxylique.

17. Procédé selon l'une quelconque des revendications 12 à 16, caractérisé par le fait que, comme composant (b) pour la préparation du polyester (A2), sont utilisés des aminoalcools présentant au moins un groupe amino tertiaire.

18. Procédé selon l'une quelconque des revendications 12 à 16, caractérisé par le fait que, comme composant (b) pour la préparation du polyester (A2), sont utilisés des produits de réaction de résines époxydiques avec des acides carboxyliques et/ou des amines.

19. Procédé selon l'une quelconque des revendications 12 à 18, caractérisé par le fait que le polyacrylate (A1) présente un indice d'OH supérieur à 20.

20. Procédé selon l'une quelconque des revendications 12 à 19, caractérisé par le fait que le polyacrylate (A1) est obtenu par réaction d'une résine d'acrylate contenant des groupes hydroxyle, avec des composés qui contiennent, par molécule, en moyenne 0,8 à 1,5, de préférence un, groupe isocyanate libre, et au moins un groupe amino tertiaire.

21. Procédé selon l'une quelconque des revendications 12 à 20, caractérisé par le fait que, comme polyacrylate (A1), est utilisé un copolymère d'acrylate préréticulé, soluble.

22. Procédé selon l'une quelconque des revendications 12 à 21, caractérisé par le fait que les groupes carboxyle du composant (A) sont introduits principalement ou totalement par addition sur un polymère OH d'anhydrides d'acides cycliques, et que la solubilisation de la résine après cette addition est conduite avec des alcools secondaires et/ou tertiaires.

23. Utilisation des agents de revêtement tels que définis à l'une quelconque des revendications 1 à 11, pour le laquage de réparation de carrosseries d'automobiles.

24. Utilisation des agents de revêtement tels que définis à l'une quelconque des revendications 1 à 11 comme laque de recouvrement, bouche-pores, laque transparente, primaire ou couche de fond.